# EUROPÄISCHE PATENTSCHRIFT

(11) **EP 0 381 965 B1**
(45) Veröffentlichungstag und Bekanntmachung des Hinweises auf die Patenterteilung: **17.05.1995**
(21) Anmeldenummer: 90101013.2
(22) Anmeldetag: 18.01.1990
(51) Int. Cl.: B27N 1/00, B27N 3/00

(54) **Verfahren und Vorrichtung zur Herstellung von lignozellulosehaltigem Faserstoff für die Herstellung von Faserplatten nach dem Trockenverfahren**
Method and device for the production of fibrous material containing ligno-cellulose in the production of fibre boards by the dry process
Procédé et dispositif pour fabriquer une matière fibreuse contenant de la ligno-cellulose pour la fabrication de plaques en fibres selon un procédé à sec

(30) Priorität: 07.02.1989 DE 3903591
(43) Veröffentlichungstag der Anmeldung: 16.08.1990
(73) Patentinhaber: Bison-Werke Bähre & Greten GmbH & Co. KG, 31832 Springe (DE)
(72) Erfinder: Mund, Rolf, D-3257 Springe (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- DE-A- 2 458 929
- FR-A- 2 530 929
- GB-A- 778 953
- US-A- 4 672 006

## Beschreibung

Die Erfindung betrifft ein Verfahren zur Herstellung von lignozellulosehaltigem Faserstoff für die Herstellung von Faserplatten nach dem Trockenverfahren, bei dem gereinigtes und mechanisch entwässertes Ausgangsmaterial wie Hackschnitzel, Hackspäne oder dergleichen in eine unter Dampfdruck stehende Vorwärmstufe gelangen und anschließend zu Faserstoff aufgeschlossen werden. Ferner ist die Erfindung auf eine Vorrichtung zur Durchführung dieses Verfahrens gerichtet.

Aus der DE-PS 24 58 929 ist ein solches Verfahren zum Herstellen von Faserplatten bekannt. Bei diesem Verfahren wird das bei der mechanischen Entwässerung der Hackspäne anfallende Wasser zum Waschen der Späne, zur Wellendichtung des Zerfaserers und als Sprühwasser bei der Formung der Faserplatten aus einer Stoffaufschwemmung (Naßverfahren) verwendet, wobei ein Naßbogen in eine Presse geführt und mechanisch auf 50 % Trockengehalt entwässert und dann abschließend unter Wärme und Druck zu einem fertigen Endprodukt getrocknet wird und dabei ausgepreßtes Rückwasser sich in einem Kasten sammelt und von dort in einen Tank gelangt, aus dem es mittels einer Pumpe durch eine Leitung gefördert wird.

Einer der wesentlichen Nachteile dieses bekannten Verfahrens im Vergleich zu Trockenverfahren besteht im hohen Wasserverbrauch, der einen entsprechend hohen Energieaufwand während des Preßvorgangs erforderlich macht und damit die Kosten des Verfahrens erhöht. Außerdem läßt sich nach der Entwässerung eine Abwasserverschmutzung, die bekanntlich ein ernstes Problem darstellt, nicht vermeiden.

Der vorliegenden Erfindung liegt die Aufgabe zugrunde, ein Verfahren der eingangs genannten Art zu schaffen, das eine besonders umweltfreundliche sowie eine besonders wirtschaftliche Verwendung des Wassers, das bei der mechanischen Entwässerung des gereinigten lignozellulosehaltigen Ausgangsmaterials anfällt, gestattet.

Die Vorrichtung zur Durchführung des Verfahrens nach der Erfindung soll einen einfachen Aufbau haben, kompakt ausgebildet sein und einen geringen Investitionsaufwand benötigen.

Erfindungsgemäß wird diese Aufgabe dadurch gelöst, daß die gesamte beim Entwässern des auf trockenem Wege gereinigten Ausgangsmaterials anfallende Wassermenge der Vorwärmstufe zugeführt wird.

Aufgrund der Verfahrenslehre nach der Erfindung entfällt nicht nur die bisherige Nachentsorgung infolge der verbleibenden Abwasserverschmutzung, sondern es ergibt sich auch eine hohe Wirtschaftlichkeit, da zum einen ein Waschen des lignozellulosehaltigen Ausgangsmaterials ganz in Fortfall gerät und zum anderen die beim Entwässern dieses Materials anfallende Wassermenge stets insgesamt in der sich an das Entwässern unmittelbar anschließenden Vorwärmstufe verwendet wird.

In Ausgestaltung des erfindungsgemäßen Verfahrens besteht die vorteilhafte Möglichkeit, der Vorwärmstufe die gesamte Wassermenge, die durch das Entwässern des lignozellulosehaltigen Ausgangsmaterials anfällt, getrennt oder gleichzeitig zusammen mit Frischdampf zuzuführen, was sich in der Praxis nach den jeweils vorhandenen Gegebenheiten richtet. Die getrennte Zufuhr der gesamten Wassermenge in die Vorwärmstufe kann bevorzugt sein.

Weitere vorteilhafte Realisierungsmöglichkeiten des erfindungsgemäßen Verfahrens und vorteilhafte Ausgestaltungen der Vorrichtung nach der Erfindung sind in den Unteransprüchen angegeben.

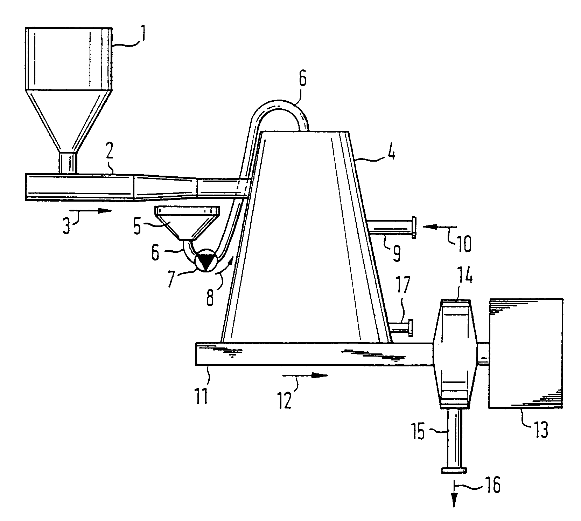

Eine Vorrichtung zur Durchführung des Verfahrens nach der Erfindung wird nachfolgend anhand eines Ausführungsbeispiels unter Bezugnahme auf die eine einzige Figur umfassende Zeichnung erläutert.

In der gezeigten Vorrichtung werden mechanisch gereinigte Hackschnitzel in geeigneter Weise einer Aufgabestation 1 zugeführt und aus dieser kontinuierlich mittels eines Schneckenförderers 2 in Pfeilrichtung 3 in einen Vorwärmer 4 eingespeist.

Der Schneckenförderer 2 drückt die Hackschnitzelmasse so zu einem Pfropfen zusammen, daß einerseits die erforderliche Abdichtung bezüglich des im Vorwärmer 4 herrschenden Dampfdrucks erreicht wird und andererseits Wasser aus der Masse der Hackschnitzel ausgepreßt wird.

Das beim auspressenden Entwässern anfallende Wasser gelangt in einen Sammeltrichter 5 und wird von dort durch eine Leitung 6 mittels einer Pumpe 7 in Pfeilrichtung 8 in den Vorwärmer 4 gepumpt. Als Pumpe 7 finden vorzugsweise solche Pumpen Verwendung, deren Funktion durch eventuell noch im Auspreßwasser enthaltene kleine Holzteilchen nicht beeinträchtigt wird. Es handelt sich aber stets um eine Hochdruckpumpe, die in der Lage ist, ihre Förderfunktion gegenüber dem im Vorwärmer 4 herrschenden Dampfdruck zu erfüllen.

Über eine Leitung 9 wird dem Vorwärmer 4 in Richtung des Pfeiles 10 Frischdampf zugeführt. Diese Leitung 9 kann gemäß einer Ausführungsvariante auch im Bereich der das Auspreßwasser zuführenden Leitung 6, d.h. im obersten Bereich des Vorwärmers 4 münden. Dabei ist es auch möglich, gegebenenfalls ergänzend im Bodenbereich des Vorwärmers 4 über eine Leitung 17 zusätzlich Frischdampf einzuführen.

Im Vorwärmer 4 werden die Holzhackschnitzel mit Wasserdampf auf eine gewünschte Temperatur von z.B. bis 165°C erwärmt und einem der Temperatur entsprechenden höheren Druck von etwa bis 7 bar ausgesetzt.

Nach der erfolgten Vorerwärmung gelangen die Hackschnitzel in den Einflußbereich einer Fördervorrichtung 11, die sie in Richtung des Pfeiles 12 zu einer von einem Motor 13 angetriebenen Zerfaserungsvorrichtung 14 transportiert. Unter den dort herrschenden Druck- und Temperaturbedingungen erfolgt die Zerfaserung der vorgewärmten Holzhackschnitzel zu Faserstoff, welcher dann durch eine Leitung 15 in Pfeilrichtung 16 ausgeblasen und anschließend weiteren Behandlungsstufen unterworfen wird.

Der von dem aufgeschlossenen Fasermaterial abgetrennte Dampf kann wieder in den Vorwärmer rückgeführt aber auch direkt oder nach vorherigem Durchlaufen einer Reinigungsstufe in die Atmosphäre geleitet werden.

## Patentansprüche

1. Verfahren zur Herstellung von lignozellulosehaltigem Faserstoff für die Herstellung von Faserplatten nach dem Trockenverfahren, bei dem gereinigtes und mechanisch entwässertes Ausgangsmaterial wie Hackschnitzel, Hackspäne oder dergleichen in eine unter Dampfdruck stehende Vorwärmstufe gelangen und anschließend zu Faserstoff aufgeschlossen werden,
dadurch **gekennzeichnet,**
daß die gesamte beim Entwässern des auf trockenem Wege gereinigten Ausgangsmaterials anfallende Wassermenge der Vorwärmstufe zugeführt wird.

2. Verfahren nach Anspruch 1,
dadurch **gekennzeichnet,**
daß der Vorwärmstufe die gesamte Wassermenge, die durch das Entwässern des Ausgangsmaterials anfällt, gleichzeitig zusammen mit Dampf zugeführt wird.

3. Verfahren nach Anspruch 2,
dadurch **gekennzeichnet,**
daß die beim Entwässern anfallende Wassermenge mit dem Dampf gemischt und dann der Vorwärmstufe zugeführt wird.

4. Verfahren nach einem der vorhergehenden Ansprüche,
dadurch **gekennzeichnet,**
daß die beim Entwässern anfallende Wassermenge der Vorwärmstufe unter einem Druck zugeführt wird, der zumindest gleich dem in der Vorwärmstufe herrschenden Druck ist.

5. Verfahren nach einem der vorhergehenden Ansprüche,
dadurch **gekennzeichnet,**
daß die beim Entwässern anfallende Wassermenge bei der Einführung in die Vorwärmstufe verdüst wird.

6. Vorrichtung zur Durchführung des Verfahrens nach einem oder mehreren der vorhergehenden Ansprüche, umfassend eine Aufgabestation (1) für das Ausgangsmaterial, einen Schneckenförderer (2), einen Sammeltrichter (5) und eine Leitung (6) für das beim Entwässern anfallende Wasser, einen Vorwärmer (4) mit einer Leitung (9) für die Zufuhr von Dampf, eine im Bodenbereich des Vorwärmers (4) angeordnete Fördervorrichtung (11), eine von einem Motor (13) angetriebene Zerfaserungsvorrichtung (14) und eine Leitung (15) zum Ausblasen des Faserstoffs,
dadurch **gekennzeichnet,**
daß die mit einer Pumpe (7) versehene Leitung (6) für das beim Entwässern anfallende Wasser in den Vorwärmer (4) mündet.

7. Vorrichtung nach Anspruch 6,
dadurch **gekennzeichnet,**
daß die Leitung (6) im oberen Bereich des Vorwärmers (4) mündet.

8. Vorrichtung nach einem der Ansprüche 6 oder 7,
dadurch **gekennzeichnet,**
daß im Vorwärmer (4) ein Mischbereich für Dampf und Wasser vorgesehen ist.

9. Vorrichtung nach einem der Ansprüche 6 bis 8,
dadurch **gekennzeichnet,**
daß die Wasser bzw. Dampf führenden Leitungen (6 bzw. 9) im wesentlichen gleichgerichtet in den Vorwärmer (4) münden.

10. Vorrichtung nach einem der Ansprüche 6 bis 8,
dadurch **gekennzeichnet,**
daß die Wasser bzw. Dampf führenden Leitungen (6 bzw. 9) unter vorgebbaren Winkeln in den Vorwärmer (4) münden.

11. Vorrichtung nach einem der Ansprüche 6 bis 10,
dadurch **gekennzeichnet,**
daß eine zusätzliche, im Bodenbereich des Vorwärmers (4) mündende Dampfleitung (17) vorgesehen ist.

12. Vorrichtung nach einem der Ansprüche 6 bis 11,
dadurch **gekennzeichnet,**
daß der von dem aufgeschlossenen Fasermaterial abgetrennte Dampf in den Vorwärmer (4) rückgeführt ist.

13. Vorrichtung nach einem der Ansprüche 6 bis 12,
dadurch **gekennzeichnet,**
daß der mit Dampf gesättigte Faserstoff nach Verlassen der Zerfaserungsvorrichtung (14) getrocknet wird, wobei der verbleibende Dampf in die freie Atmosphäre austritt.

14. Vorrichtung nach Anspruch 13,
dadurch **gekennzeichnet,**
daß der Dampf vor dem Entweichen in die freie Atmosphäre durch eine Reinigungsstufe geleitet wird.

## Claims

1. Method of manufacturing fibre material containing lignocellulose for the production of fibre boards in accordance with the dry process, in which cleaned and mechanically dewatered starting material such as hacked chips, hacked shavings or the like enter into a preheating stage standing under steam pressure and are subsequently broken down to fibre material, characterised in that all the water which occurs during the dewatering of the starting material cleaned by the dry process is returned to the preheating stage.

2. Method in accordance with claim 1, characterised in that the total quantity of water which occurs through dewatering of the starting material is passed together with steam at the same time to the preheating stage.

3. Method in accordance with claim 2, characterised in that the quantity of water which occurs during dewatering is mixed with the steam and then supplied to the preheating stage.

4. Method in accordance with one of the preceding claims, characterised in that the quantity of water which occurs during dewatering is led to the preheating stage at a pressure which is at least substantially the same as the pressure which prevails in the preheating stage.

5. A method in accordance with one of the preceding claims, characterised in that the quantity of water which occurs during dewatering is injected through a nozzle on being introduced into the preheating stage.

6. Apparatus for carrying out the method in accordance with one or more of the preceding claims comprising a dispensing station (1) for the starting material, a screw conveyor (2), a collecting funnel (5) and a duct (6) for the water which occurs during dewatering, a preheater (4) with a duct (9) for the supply of steam, a conveyor device (11) arranged in the floor region of the preheater (4), a device (14) driven by a motor (13) for forming fibres and a duct (15) for blowing out the fibrous material, characterised in that the duct (6) for the water which occurs during dewatering is provided with a pump (7) and opens into the preheater (4).

7. Apparatus in accordance with claim 6, characterised in that the duct (6) opens into the upper region of the preheater (4).

8. Apparatus in accordance with one of the claims 6 or 7, characterised in that a mixing region for steam and water is provided in the preheater (4).

9. Apparatus in accordance with one of the claims 6 to 8, characterised in that the ducts (6, 9) carrying water and steam respectively open in substantially the same direction into the preheater (4).

10. Apparatus in accordance with one of the claims 6 to 8, characterised in that the ducts (6 and 9) which carry water and steam respectively open at predeterminable angles into the preheater (4).

11. Apparatus in accordance with one of the claims 6 to 10, characterised in that an additional steam duct (17) is provided which opens into the floor region of the preheater (4).

12. Apparatus in accordance with one of the claims 6 to 11, characterised in that the steam which is separated off from the broken down fibre material is returned into the preheater (4).

13. Apparatus in accordance with one of the claims 6 to 12, characterised in that the fibre material saturated with steam is dried after leaving the fibre forming device (14), with the remaining steam emerging into the free atmosphere.

14. Apparatus in accordance with claim 13, characterised in that the steam is led through a cleaning stage prior to escaping into the free atmosphere.

## Revendications

1. Procédé de fabrication de matière fibreuse contenant de la ligno-cellulose pour la fabrication de plaques en fibres selon le procédé à sec, dans lequel un matériau de départ épuré et déshydraté par voie mécanique, tel que des découpures de hachage, des copeaux de hachage ou analogues, arrive dans un étage de préchauffage placé sous une pression de vapeur puis est préparé pour donner un matériau fibreux, caractérisé en ce qu'est amené à l'étage de préchauffage l'ensemble de la quantité d'eau ayant été produite lors de la déshydratation du matériau de départ épuré par voie sèche.

2. Procédé selon la revendication 1, caractérisé en ce qu'à l'étage de préchauffage est amenée l'ensemble de la quantité d'eau produite par la déshydratation du matériau de départ, l'amenée se faisant simultanément et conjointement à de la vapeur.

3. Procédé selon la revendications 2, caractérisé en ce que la quantité d'eau produite lors de la déshydratation est mélangée à de la vapeur puis amenée à l'étage de préchauffage.

4. Procédé selon l'une des revendications précédentes, caractérisé en ce que la quantité d'eau produite lors de la déshydratation est amenée à l'étage de préchauffage sous une pression au moins égale à la pression régnant dans l'étage de préchauffage.

5. Procédé selon l'une des revendications précédentes, caractérisé en ce que la quantité d'eau produite lors de la déshydratation est diffusée-atomisée par gicleur dans l'étage de préchauffage.

6. Dispositif pour mettre en oeuvre le procédé selon l'une ou plusieurs des revendications précédentes, comprenant un poste d'alimentation (1) pour le matériau de départ, un transporteur à vis (2), un entonnoir collecteur (5) et une conduite (6) pour l'eau produite lors de la déshydratation, un préchauffeur (4) avec une conduite (9) destinée à l'amenée de vapeur, un dispositif de transport (11) disposé dans la zone de fond du préchauffeur (4), un dispositif de trituration (14) entraîné par un moteur (13) et une conduite (15), pour expulser par soufflage le produit fibreux, caractérisé en ce que la conduite (6), pourvue d'une pompe (7) pour l'eau produite lors de la déshydratation, débouche dans le préchauffeur (4).

7. Dispositif selon la revendication 6, caractérisé en ce que la conduite (6) débouche dans la zone supérieure du préchauffeur (4).

8. Dispositif selon l'une des revendications 6 ou 7, caractérisé en ce qu'une zone de mélange pour la vapeur et l'eau est prévue dans le préchauffeur (4).

9. Dispositif selon l'une des revendications 6 à 8, caractérisé en ce que les conduites (6), respectivement (9) guidant l'eau, respectivement la vapeur débouchent dans le préchauffeur (4) en étant orientées sensiblement de façon identique.

10. Dispositif selon l'une des revendications 6 à 8, caractérisé en ce que les conduites (6), respectivement (9), guidant l'eau, respectivement la vapeur, débouchent dans le préchauffeur (4) sous des angles pouvant être prédéterminés.

11. Dispositif selon l'une des revendications 6 à 10, caractérisé en ce qu'une conduite de vapeur (17) supplémentaire débouchant dans la zone de fond du préchauffeur (4) est prévue.

12. Dispositif selon l'une des revendications 6 à 11, caractérisé en ce que la vapeur séparée du matériau fibreux préparé est recyclée dans le préchauffeur (4).

13. Dispositif selon l'une des revendications 6 à 12, caractérisé en ce que le matériau fibreux saturé en vapeur, après avoir quitté le dispositif de trituration (14), est séché, la vapeur résiduelle sortant à l'atmosphère.

14. Dispositif selon la revendication 13, caractérisé en ce que la vapeur est passée dans un étage d'épuration avant de s'échapper dans l'atmosphère.
